# FASCICULE DE BREVET EUROPEEN

(11) **EP 1 649 149 B1**
(45) Date de publication et mention de la délivrance du brevet: **18.10.2006**
(21) Numéro de dépôt: 04767660.6
(22) Date de dépôt: 12.07.2004
(51) Int. Cl.: F01N 3/022

(54) **BLOC POUR LA FILTRATION DE PARTICULES CONTENUES DANS LES GAZ D'ECHAPPEMENT D UN MOTEUR A COMBUSTION INTERNE.**
BLOCK ZUR FILTRATION VON IN ABGASEN VON EINEM VERBRENNUNGSMOTOR ENTHALTENEN TEILCHEN
BLOCK FOR THE FILTRATION OF PARTICLES CONTAINED IN EXHAUST GASES FROM AN INTERNAL COMBUSTION ENGINE

(30) Priorité: 15.07.2003 FR 0308588
(43) Date de publication de la demande: 26.04.2006
(73) Titulaire: Saint-Gobain Centre de Recherches et d'Etudes Européen, 92400 Courbevoie (FR)
(72) Inventeur: BARDON, Sébastien, F-69006 Lyon (FR)
(74) Mandataire: Sartorius, Jérome
(86) Numéro de dépôt international: PCT/FR2004/001829
(87) Numéro de publication internationale: WO 2005/008037

(56) Documents cités:
- EP-A- 0 816 065
- EP-A- 1 142 619
- WO-A-94/21900
- PATENT ABSTRACTS OF JAPAN vol. 017, no. 117 (M-1378), 11 mars 1993 (1993-03-11) & JP 04 301129 A (MATSUSHITA ELECTRIC IND CO LTD), 23 octobre 1992 (1992-10-23)

## Description

L'invention se rapporte à un corps formé par assemblage d'une pluralité de blocs, utilisés notamment pour la filtration de particules contenues dans les gaz d'échappement d'un moteur à combustion interne, en particulier du type diesel.

Classiquement, avant d'être évacués à l'air libre, les gaz d'échappement peuvent être purifiés au moyen d'un filtre à particules tel que celui représenté sur les figures 1 et 2, connu de la technique antérieure, tel que selon EP 1 142 613 A.

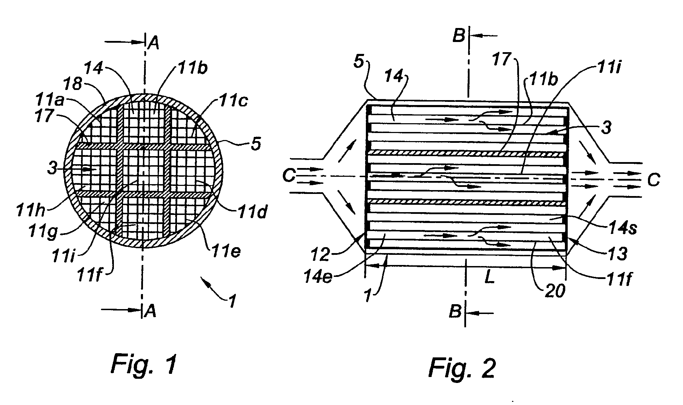

Un filtre à particules 1 est représenté sur la figure 1 en coupe transversale selon le plan de coupe B-B représenté sur la figure 2, et sur la figure 2 en coupe longitudinale selon le plan de coupe A-A représenté sur la figure 1.

Le filtre à particules 1 comporte classiquement au moins un corps filtrant 3, inséré dans une enveloppe métallique 5. Le corps filtrant 3 résulte de l'assemblage et de l'usinage d'une pluralité de blocs 11, référencés 11a-11i, produits par extrusion d'un matière céramique (cordiérite, carbure de silicium,...) de manière à former des structures poreuses en nid d'abeille.

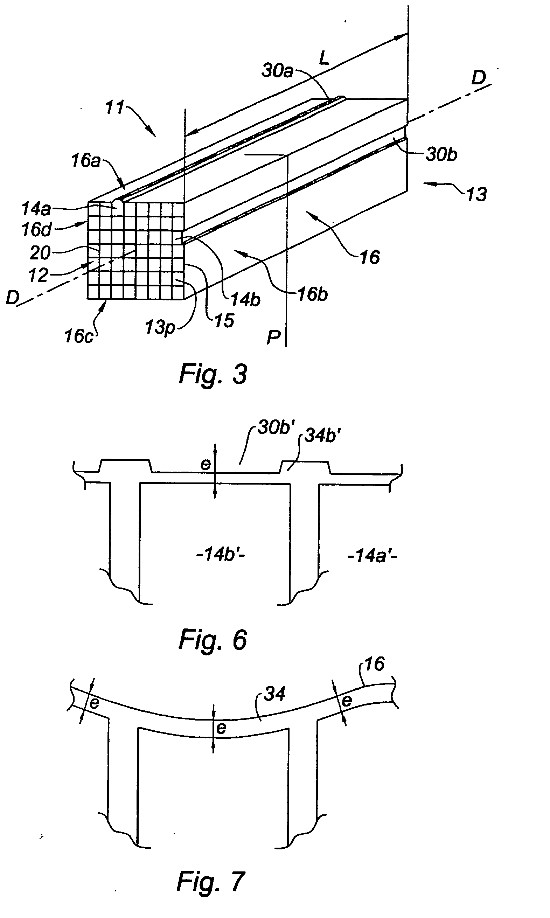

Avant assemblage et usinage, un bloc 11 (voir figure 3) a classiquement la forme d'un parallélépipède rectangle s'étendant selon un axe D-D entre deux faces amont 12 et aval 13 sensiblement carrées sur lesquelles débouchent une pluralité de canaux 14 de section carrée, rectilignes, parallèles à l'axe D-D.

L'ensemble des faces extérieures 15 des canaux localisés à la périphérie du bloc 11, ou « canaux périphériques » 13p, forme une surface extérieure 16 du bloc 11 (voir figure 3). Du fait de la section transversale sensiblement carrée du bloc 11, la surface extérieure 16 comportent quatre faces 16a-16d, perpendiculaires deux à deux.

Après extrusion, les blocs 11 sont alternativement bouchés sur la face amont (canaux de sortie 14s) ou sur la face aval (canaux d'entrée 14e), comme cela est bien connu.

Les blocs 11a-11i sont alors assemblés entre eux par collage au moyen de joints 17 en ciment céramique généralement constitué de silice et/ou de carbure de silicium et/ou de nitrure d'aluminium. L'assemblage ainsi constitué peut être ensuite usiné pour prendre, par exemple, une section ronde. Il en résulte un corps filtrant 3 cylindrique d'axe C-C, qui peut être inséré dans l'enveloppe 5, un joint périphérique 18, étanche aux gaz d'échappement, étant disposé entre les blocs filtrants extérieurs 11a-11h et l'enveloppe 5.

Comme l'indiquent les flèches représentées sur la figure 2, le flux F des gaz d'échappement entre dans le corps filtrant 3 par des canaux d'entrée 14e, traverse des parois filtrantes 20 de ces canaux pour rejoindre les canaux de sortie 14s, puis s'échappe vers l'extérieur.

Après un certain temps d'utilisation, les particules, ou « suies », accumulées dans les canaux d'entrée 14e du corps filtrant 3 altèrent les performances du moteur. Pour cette raison, le corps filtrant 3 doit être régénéré régulièrement, par exemple tous les 500 kilomètres. La régénération, ou « décolmatage », consiste à oxyder les suies en les chauffant jusqu'à une température permettant leur inflammation.

Pendant les phases de régénération, les gaz d'échappement transportent vers l'aval toute l'énergie calorifique dégagée par la combustion des suies. De plus, les suies ne se déposant pas uniformément dans les différents canaux, les zones de combustion ne sont uniformément réparties dans le corps filtrant 3. Enfin, les zones périphériques du corps filtrant 3 sont refroidies, à travers l'enveloppe métallique 5, par l'air environnant.

Il en résulte que la température diffère selon les zones du corps filtrant 3 et ne varie pas uniformément. L'inhomogénéité des températures au sein du corps filtrant 3 et les différences de nature des matériaux utilisés pour les blocs filtrants 11a-11i d'une part et pour les joints 17 d'autre part, génèrent des contraintes locales de fortes amplitudes pouvant conduire à des ruptures ou à des fissures locales. En particulier, les contraintes locales aux interfaces entre les blocs 11a-11h et l'enveloppe 5, et entre les blocs 11a-11i et les joints 17, peuvent conduire à un décollement des blocs 11a-11i diminuant ainsi la durée de vie du filtre à particules 1.

Le but de l'invention est de fournir un nouveau corps filtrant apte à diminuer ce risque de décollement.

On atteint ce but au moyen d'un corps filtrant destiné notamment à la filtration de particules contenues dans les gaz d'échappement d'un moteur à combustion interne, ledit corps filtrant étant formé par collage de blocs filtrants au moyen d'un joint, remarquable en ce qu'une surface extérieure d'un premier desdits blocs, en regard avec un deuxième desdits blocs et en contact avec ledit joint, comporte au moins une irrégularité de type bossage et/ou creux.

Comme on le verra plus en détail dans la suite de la description, la présence d'irrégularités sur la surface extérieure d'un bloc favorise l'adhésion des joints 17 et limite donc le risque de décollement en cas de contraintes thermo-mécaniques élevées.

Selon d'autres caractéristiques préférées de l'invention,
- ladite irrégularité s'étend selon l'axe longitudinal dudit bloc sur toute la longueur dudit premier bloc, ce qui, avantageusement, permet sa formation lors de l'extrusion;
- ladite irrégularité est un creux porté par une face extérieure d'un canal de sortie desdits gaz disposé à la périphérie dudit premier bloc ;
- ladite irrégularité est un creux ménagé dans l'épaisseur d'une paroi extérieure d'un canal disposé à la périphérie dudit premier bloc filtrant, ce qui, avantageusement permet une diminution de la quantité de matière, nécessaire pour fabriquer le bloc ;
- ladite irrégularité est un bossage porté par une face extérieure d'un canal d'entrée desdits gaz disposé à la périphérie dudit premier bloc filtrant, ce qui, avantageusement, permet d'augmenter le volume intérieur de ces canaux d'entrée et donc leur capacité de stockage des suies ;
- la largeur de ladite irrégularité, mesurée dans un plan transversal dudit premier bloc est sensiblement égale à la largeur de ladite face extérieure dudit canal ;
- ladite surface extérieure comporte une pluralité desdites irrégularités régulièrement espacées les unes des autres ;
- en coupe transversale, au moins une portion de ladite surface extérieure dudit premier bloc présente une forme sinusoïdale ;
- ladite irrégularité est conformée de manière à pouvoir être logée dans une irrégularité de forme complémentaire dudit deuxième bloc;
- ladite irrégularité est un creux ménagé dans l'épaisseur d'une paroi extérieure d'un canal disposé à la périphérie dudit premier bloc.

La description qui va suivre, faite en se référant aux dessins annexés, permettra de mieux comprendre et apprécier les avantages de l'invention. Dans ces dessins :
- la figure 1 représente un filtre à particules selon la technique antérieure, en coupe transversale selon le plan de coupe transversal B-B représenté sur la figure 2 ;
- la figure 2 représente le même filtre à particules, selon le plan de coupe longitudinale A-A représenté sur la figure 1 ;
- la figure 3 représente en perspective un bloc pouvant être utilisé pour fabriquer un corps filtrant selon l'invention ;
- les figures 4 et 5 représentent, en coupe transversale selon le plan P représenté sur la figure 3, des détails du bloc représenté sur la figure 3 ;
- les figures 6 et 7 représentent en coupe transversale des détails de blocs selon différentes variantes de l'invention.

Sur ces figures, non limitatives, les différents éléments ne sont pas nécessairement représentés à la même échelle. Des références identiques ont été utilisées sur les différentes figures pour désigner des éléments identiques ou similaires.

Les figures 1 et 2 ayant été décrites en préambule, on se reporte à la figure 3, également partiellement décrite ci-dessus.

Selon l'invention, les première et deuxième faces 16a et 16b de la surface extérieure 16 du bloc filtrant 11 comportent des première et deuxième irrégularités 30a et 30b, respectivement, qui s'étendent selon l'axe longitudinal D-D du bloc 11. De préférence, les irrégularités 30a et 30b ont une longueur « L » égale à celle du bloc 11 et s'étendent, depuis la face amont 12 jusqu'à la face aval 13, sur des faces extérieures 32a et 32b de canaux périphériques 14a et 14b, respectivement.

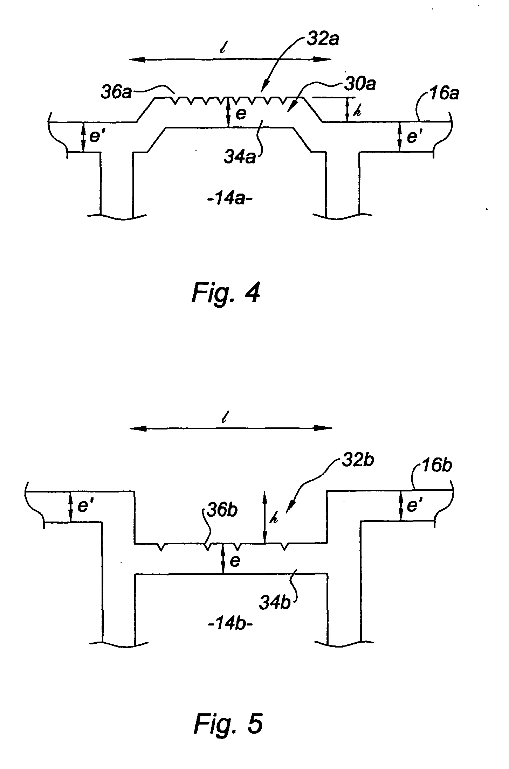

Les irrégularités 30a et 30b, représentées en coupe sur les figures 4 et 5, respectivement, sont un bossage et une rainure, respectivement. La largeur « I » de ces irrégularités est sensiblement celle des faces extérieures 32a et 32b des canaux périphériques 14a et 14b, respectivement. Les irrégularités 30a et 30b sont disposées au droit d'un seul canal, 14a et 14b respectivement.

La hauteur « h » des irrégularités 30a et 30b peut être quelconque. De préférence, la hauteur « h » est inférieure à l'épaisseur locale des parois extérieures 34a et 34b des canaux périphériques 30a et 30b sur les faces extérieures 32a et 32b desquelles les irrégularités 30a et 30b s'étendent, respectivement.

De préférence, l'épaisseur "e" des parois extérieures des canaux périphériques formant le bossage 30a et/ou la rainure 30b est sensiblement constante et sensiblement égale à l'épaisseur « e' » des parois extérieures des canaux périphériques adjacents.

De préférence, l'épaisseur "e" n'est jamais nulle, c'est-à-dire que l'irrégularité ne crée pas une ouverture latérale du ou des canaux périphériques sur lesquels elle est ménagée.

Le bossage 30a se présente alors comme une déformation vers l'extérieur de la paroi extérieure 34a du canal 14a (figure 4). Il en résulte avantageusement pour le canal 14a une augmentation du volume intérieur utile.

Après chaque régénération, les cendres s'accumulent dans les canaux d'entrée, ce qui limite leur rendement ultérieur et limite la durée d'utilisation du bloc filtrant avant la régénération suivante. II est donc préférable, pour prolonger la durée de vie du filtre, que le canal 14a soit un canal d'entrée, c'est-à-dire un canal par lequel les gaz à filtrer sont introduits dans le bloc filtrant 11.

De préférence, la rainure 30b s'étend sur un canal 14b de sortie (figure 5). Avantageusement, on évite ainsi une perte de volume d'un canal d'entrée.

En outre, la diminution du volume d'un canal de sortie périphérique permet de l'adapter aux volumes de gaz filtré réduits qu'il reçoit. En effet, un canal de sortie périphérique ne reçoit pas de gaz filtré par sa ou ses face(s) en contact avec les joints 17. II reçoit donc un volume de gaz plus faible que les canaux disposés à intérieur du bloc filtrant, ou « canaux intérieurs », dont les quatre faces sont filtrantes. La rainure 30b telle que représentée sur la figure 5 conduit à une réduction de la section du canal de sortie périphérique 14b et permet avantageusement une homogénéisation, entre les différents canaux de sortie, des rapports entre la section d'un canal et le volume de gaz qu'il est susceptible de recevoir. L'écoulement du flux gazeux à travers le bloc filtrant en est facilité et la perte de charge réduite.

Pour encore améliorer l'adhérence du joint 17 sur la surface extérieure 16 du bloc 11, les surfaces extérieures du bossage 30a et/ou de la rainure 30b peuvent elles-mêmes présenter des micro-rugosités 36a et 36b, respectivement.

Comme représenté sur la figure 6, une rainure 30b' peut encore résulter d'une diminution locale de l'épaisseur « e » d'une paroi extérieure 34b' d'un canal 14b'. Avantageusement, la quantité de matière nécessaire pour fabriquer le bloc filtrant 11 en est réduite. En outre, ce mode de réalisation permet de ménager des rainures sur des canaux d'entrée 14a' sans diminution du volume intérieur de ces canaux.

Le nombre d'irrégularités 30a et 30b n'est pas limité. Dans un mode de réalisation de l'invention, des bossages 30a et des rainures 30b se succèdent alternativement sur la largeur d'au moins une face 16a-16d de la surface extérieure 16 du bloc 11, recouvrant de préférence des canaux d'entrée et de sortie successifs, respectivement. De préférence, les rainures 30b et bossages 30a longitudinaux sont régulièrement espacés les uns des autres.

La transition entre bossages et rainures peut être progressive, sans angles saillants. Par exemple, en coupe transversale, la surface extérieure 16 du bloc peut avoir, au moins localement, une forme sinusoïdale comme représenté sur la figure 7. De préférence, l'épaisseur «e» des parois extérieures 34 des canaux périphériques est sensiblement constante.

Le bossage 30a ou la rainure 30b peuvent également être disposés à cheval sur deux canaux, cette disposition étant préférable pour renforcer la cohérence mécanique du bloc 11.

De préférence, la forme, les dimensions et le nombre des irrégularités 30a et 30b sont déterminés en fonction du support, c'est-à-dire des joints 17, avec lequel elles sont destinées à être solidarisées. La forme, les dimensions et le nombre des irrégularités 30a et 30b peuvent en particulier dépendre de la nature et/ou de l'épaisseur des joints 17, de la position des irrégularités sur la surface extérieure 16 du bloc 11 et/ou de la position du bloc 11 au sein du corps filtrant 3. Toutes les faces 16a-16d d'un même bloc filtrant 11 ne sont donc pas nécessairement pourvues des mêmes irrégularités.

De préférence cependant, la largeur "I" des irrégularités est inférieure ou égale, de préférence sensiblement égale, à celle des canaux sur lesquels elles s'étendent.

Ni la largeur « l », ni la longueur « L », ni l'épaisseur « e », ni l'orientation d'une irrégularité n'est limitative. Par exemple, selon l'invention, la surface extérieure 16 du bloc filtrant 11 peut présenter des stries diagonales, selon une ou plusieurs directions, des trous, des encoches, etc. La largeur, l'épaisseur ou l'orientation peuvent également varier le long d'une même irrégularité.

Dans une variante de l'invention non représentée, deux blocs destinés à être assemblés avec apposition de deux faces respectives l'une contre l'autre présentent, sur lesdites faces, des irrégularités ayant des formes complémentaires, disposées de manière à pouvoir être logées les unes dans les autres.

Les irrégularités s'étendant longitudinalement peuvent être fabriquées lors de l'extrusion du bloc 11 au moyen d'une filière adaptée, selon des techniques connues de l'homme du métier. Il est également possible de ménager les irrégularités à la surface de bloc 11 solides en « sculptant » la surface extérieure 16 du bloc 11 et/ou en y fixant des bourrelets 30a de matière par collage, soudage ou tout autre technique connue. La matière des bourrelets 30a rapportés peut être identique ou différente de la matière constituant le bloc 11.

Bien entendu, la présente invention n'est pas limitée aux modes de réalisation décrits et représentés ci-dessus, fournis à titre illustratif et non limitatif.

Le joint 17 interposé entre les surfaces extérieures respectives de deux blocs, en regard l'une de l'autre, peut être continu ou discontinu, pourvu qu'il assure la solidarisation de ces blocs.

Le bloc filtrant 11 pourrait avoir une forme quelconque.

La section transversale des canaux 14 n'est pas limitée à la forme carrée. La section des canaux d'entrée pourrait également être différente de celle des canaux de sortie. La section transversale d'un canal pourrait aussi évoluer, périodiquement ou non, le long de ce canal.

## Revendications

1. Corps filtrant destiné notamment à la filtration de particules contenues dans les gaz d'échappement d'un moteur à combustion interne, ledit corps filtrant étant formé par collage de blocs filtrants au moyen d'un joint (17), **caractérisé en ce qu'**une surface extérieure (16) d'un premier desdits blocs (11), en regard avec un deuxième desdits blocs et en contact avec ledit joint (17), comporte au moins une irrégularité (30a,30b) de type bossage et/ou creux.

2. Corps filtrant selon la revendication 1, **caractérisé en ce que** ladite irrégularité (30a,30b) s'étend selon l'axe longitudinal (D-D) dudit premier bloc (11) sur toute la longueur dudit premier bloc (11).

3. Corps filtrant selon l'une quelconque des revendications 1 et 2, **caractérisé en ce que** ladite irrégularité (30a,30b) est un creux (30b) porté par une face extérieure (32b) d'un canal de sortie (14b) desdits gaz disposé à la périphérie dudit premier bloc (11).

4. Corps filtrant selon l'une quelconque des revendications 1 et 2, **caractérisé en ce que** ladite irrégularité (30a,30b) est un bossage (30a) porté par une face extérieure (32a) d'un canal d'entrée (14a) desdits gaz disposé à la périphérie dudit premier bloc (11).

5. Corps filtrant selon l'une quelconque des revendications 3 et 4, **caractérisé en ce que** la largeur (l) de ladite irrégularité (30a,30b), mesurée dans un plan transversal (P) dudit premier bloc (11), est sensiblement égale à la largeur de ladite face extérieure (32a,32b) dudit canal (14a,14b).

6. Corps filtrant selon l'une quelconque des revendications précédentes, **caractérisé en ce que** ladite surface extérieure (16) comporte une pluralité desdites irrégularités (30a,30b) régulièrement espacées les unes des autres.

7. Corps filtrant selon l'une quelconque des revendications précédentes, **caractérisé en ce qu'**au moins une portion de ladite surface extérieure (16) dudit premier bloc (11) présente, en coupe transversale, une forme sinusoïdale.

8. Corps filtrant selon l'une quelconque des revendications précédentes, **caractérisé en ce que** ladite irrégularité (30a,30b) est conformée de manière à pouvoir être logée dans une irrégularité (30a,30b) de forme complémentaire dudit deuxième bloc.

9. Corps filtrant selon l'une quelconque des revendications précédentes, **caractérisé en ce que** ladite irrégularité (30a,30b) est un creux (30b') ménagé dans l'épaisseur d'une paroi extérieure (34b') d'un canal (14b') disposé à la périphérie dudit premier bloc (11).

## Claims

1. A filter body intended in particular for filtering particles contained in the exhaust gases of an internal combustion engine, said filter body being formed by bonding filter units by means of a joint (17), **characterized in that** an exterior surface (16) of a first of said units (11) face to face with a second of said units and in contact with said joint (17) includes at least one irregularity (30a, 30b) of the boss and/or recess type.

2. A filter body according to claim 1, **characterized in that** said irregularity (30a, 30b) extends along the longitudinal axis (D-D) of said first unit (11) over the whole length of said first unit (11).

3. A filter body according to either claim 1 or claim 2, **characterized in that** said irregularity (30a, 30b) is a recess (30b) carried by an exterior face (32b) of a gas outlet passage (14b) at the periphery of said first unit (11).

4. A filter body according to either claim 1 or claim 2, **characterized in that** said irregularity (30a, 30b) is a boss (30a) carried by an exterior face (32a) of a gas inlet passage (14a) at the periphery of said first unit (11).

5. A filter body according to either claim 3 or claim 4, **characterized in that** the width (l) of said irregularity (30a, 30b) measured in a transverse plane (P) of said first unit (11) is substantially equal to the width of said exterior face (32a, 32b) of said passage (14a, 14b).

6. A filter body according to any one of the preceding claims, **characterized in that** said exterior surface (16) includes a plurality of said irregularities (30a, 30b) regularly spaced from each other.

7. A filter body according to any one of the preceding claims, **characterized in that** at least one portion of said exterior surface (16) of said first unit (11) has a sinusoidal shape in cross section.

8. A filter body according to any one of the preceding claims, **characterized in that** said irregularity (30a, 30b) is conformed so that it can be accommodated in an irregularity (30a, 30b) of complementary shape of said second unit.

9. A filter body according to any one of the preceding claims, **characterized in that** said irregularity (30a, 30b) is a recess (30b') formed in the thickness of an exterior wall (34b') of a passage (14b') at the periphery of said first unit (11).

## Patentansprüche

1. Filterkörper, insbesondere zur Filterung von Partikeln, die in den Abgasen eines Verbrennungsmotors enthalten sind, wobei der Filterkörper durch Aneinanderkleben von Filterblöcken mittels eines Verbindungsteils (17) gebildet ist, **dadurch gekennzeichnet, dass** eine Außenoberfläche (16) eines ersten der Blöcke (11), die einem zweiten der Blöcke gegenüberliegt und das Verbindungsteil (17) berührt, mindestens eine Irregularität (30a,30b) in Form eines Vorsprungs und/oder einer Vertiefung aufweist.

2. Filterkörper nach Anspruch 1, **dadurch gekennzeichnet, dass** die Irregularität (30a,30b) über die gesamte Länge des ersten Blocks (11) entlang der Längsachse (D-D) des ersten Blocks (11) verläuft.

3. Filterkörper nach einem der Ansprüche 1 und 2, **dadurch gekennzeichnet, dass** die Irregularität (30a,30b) eine Vertiefung (30b) ist, die von einer Außenfläche (32b) eines am Außenbereich des ersten Blocks (11) angeordneten Auslasskanals (14b) für die Gase gebildet ist.

4. Filterkörper nach einem der Ansprüche 1 und 2, **dadurch gekennzeichnet, dass** die Irregularität (30a,30b) ein Vorsprung (30a) ist, der von einer Außenfläche (32a) eines am Außenbereich des ersten Blocks (11) angeordneten Einlasskanals (14a) für die Gase gebildet ist.

5. Filterkörper nach einem der Ansprüche 3 und 4, **dadurch gekennzeichnet, dass** die Breite (l) der Irregularität (30a,30b) gemessen in einer Querebene (P) des ersten Blocks (11) im Wesentlichen gleich der Breite der Außenfläche (32a,32b) des Kanals (14a,14b) ist.

6. Filterkörper nach einem der vorhergehenden Ansprüche, **dadurch gekennzeichnet, dass** die Außenoberfläche (16) mehrere der genannten Irregularitäten (30a,30b) aufweist, die in regelmäßigen Abständen voneinander angeordnet sind.

7. Filterkörper nach einem der vorhergehenden Ansprüche, **dadurch gekennzeichnet, dass** mindestens ein Teil der Außenoberfläche (16) des ersten Blocks (11) im Querschnitt sinusförmig ausgebildet ist.

8. Filterkörper nach einem der vorhergehenden Ansprüche, **dadurch gekennzeichnet, dass** die Irregularität (30a,30b) derart angepasst ist, dass sie in einer komplementär geformten Irregularität (30a,30b) des zweiten Blocks angeordnet werden kann.

9. Filterkörper nach einem der vorhergehenden Ansprüche, **dadurch gekennzeichnet, dass** die Irregularität (30a,30b) eine Vertiefung (30b') ist, die in der Dicke einer Außenwand (34b') eines am Außenbereich des ersten Blocks (11) angeordneten Kanals (14b') ausgebildet ist.
